# EUROPEAN PATENT APPLICATION

(11) **EP 2 658 332 A1**
(43) Date of publication of application: **30.10.2013**
(21) Application number: 11851404.1
(22) Date of filing: 19.12.2011
(51) Int. Cl.: H04W 76/02, H04W 28/10, H04W 88/16

(54) **GATEWAY DEVICE, COMMUNICATION SYSTEM AND COMMUNICATION METHOD**

(30) Priority: 20.12.2010 JP 2010283400
(71) Applicant: NEC Corporation, Tokyo 108-8001 (JP)
(72) Inventor: TAKANO, Yusuke, Tokyo 108-8001 (JP); TAMURA, Toshiyuki, Tokyo 108-8001 (JP)
(74) Representative: Betten & Resch
(86) International application number: PCT/JP2011/079311
(87) International publication number: WO 2012/086570

(57) **Abstract**

To provide a gateway apparatus, a system, and a method capable of reducing a load on a node constituting a backbone network without making a major change to an existent packet communication apparatus. A gateway apparatus (GW: 103) arranged between a base station (102) and the backbone network monitors a communication signal transmitted from a terminal apparatus (101) through the base station (102). In a case where specifying information is not included in the communication signal, the gateway apparatus outputs the communication signal to an SGSN (106) of the backbone network. In a case where the specifying information is included in the communication signal, the (gateway apparatus forwards the communication signal to an external network (110).

## Description

### TECHNICAL FIELD

### (CROSS-REFERENCE TO RELATED APPLICATIONS)

This application is based upon and claims the benefit of the priority of Japanese patent application No. 2010-283400 filed on December 20, 2010, the disclosure of which is incorporated herein in its entirety by reference thereto.
The present invention relates to a mobile communication network technology. More specifically, the invention relates to a communication system, a communication apparatus, and a communication method suitable for reducing a load on a node constituting a backbone network of a packet data network for supporting radio access.

### BACKGROUND

In recent years, due to high functionalization and spread of mobile terminal apparatuses, such as high functional portable information terminals which have been released one after another, the mobile terminal apparatuses are employed for communication with an external IP (Internet Protocol) network for Web site browsing, content delivery, and the like. With the increase in data traffic in a mobile operator's network that provides a general packet radio service (General Packet Radio Service: GPRS), a load on a network node such as an SGSN (serving GPRS support node: serving node) or a GGSN (gateway GPRS support node: gateway node) has increased. The SGSN and the GGSN are components of a backbone network in a packet data network that supports radio access. Specifications of the general packet radio service GPRS for 2G (second generation), GSM (Global System for Mobile communication) and 3G (third generation) universal mobile telecommunication system (Universal Mobile Telecommunication System: UMTS) are described in Non Patent Literature 1, for example.

A technology for connecting a user traffic to an external network from a gateway located in a distance as shortest as possible from a mobile terminal apparatus or located in a shortest distance from the mobile terminal apparatus in terms of a network topology, without bringing the user traffic into the mobile operator's network, is incorporated, as "SIPTO with Traffic Offload Function (TOF)" in the 3GPP standardization organization, and is described in "Annex B (informative)" in Non Patent Literature 1. In this technology, an IP traffic selected on an Iu-PS interface in the universal mobile telecommunication system (UMTS) is offloaded using packet inspection.

### CITATION LIST

### NON-PATENT LITERATURE

[NPL 1] 3GPP TS23.060: http://www.3gpp.org/ftp/Specs/archive/23_series/23.060/23060-a10.zip

### SUMMARY

### TECHNICAL PROBLEM

An analysis of the related art will be given below.

A first problem of the related art is as follows. A TOF apparatus that offloads an IP traffic on Iu-PS interface monitors user data, and then connects a traffic to be offloaded to an external packet data network such as an Internet network, using a NAT (Network Address Translation: translation of a private IP address to a global IP address)) technology. Accordingly, the IP address of a mobile terminal apparatus (user equipment: UE) for the IP traffic through the TOF apparatus is changed. For this reason, operations of all applications on the mobile terminal apparatus (UE) are not guaranteed (some applications may not operate on the UE, or an inconvenience such as a malfunction may occur).

A second problem of the related art is that a great modification needs to be added to an existent packet communication apparatus. To take an example, it is necessary to transmit from an SGSN user data MSISDN (Mobile Station International Subscriber Directory Number: number given for internationally identifying a mobile terminal apparatus) and charging information (Charging Characteristics: charging method to be applied) necessary for the TOF apparatus to perform charging (refer to Annex B.2 in Non Patent Literature 1). For this reason, there arises a need for revamping the existent SGNS, an existent RNC (Radio Network Controller), or the like.

Accordingly, a main object of the present invention is to provide a gateway apparatus, a communication system, and a communication method, capable of suppressing an increase in a load on a node constituting a backbone network, without making a major change to an existent packet communication apparatus.

### SOLUTION TO PROBLEM

According to one aspect of the present invention, there is provided a gateway apparatus connected between a base station and a backbone network, wherein the gateway apparatus monitors a communication signal transmitted from a terminal apparatus through the base station, and in a case where specifying information is not included in the communication signal, the gateway apparatus outputs the communication signal to the backbone network, and, in a case where the specifying information is included in the communication signal, the gateway apparatus forwards the communication signal to an external network.

According to another aspect of the present invention, there is provided a communication system including the gateway apparatus.

According to a further another aspect of the present invention, there is provided a communication method comprising:
monitoring a communication signal transmitted from a terminal apparatus through a base station; and
in a case where specifying information is not included in the communication signal, outputting the communication signal to an external network through a backbone network, and in a case where the specifying information is included in the communication signal, forwarding the communication signal to an external network not through the backbone network.

### ADVANTAGEOUS EFFECTS OF INVENTION

According to the present invention, a load on a node constituting a backbone network can be reduced, without making a major change to an existent packet communication apparatus. According to the present invention, a user traffic can be offloaded to an external network, so that a mobile operator can reduce transmission cost of the user traffic, apparatus cost, and the like.

### BRIEF DESCRIPTION OF THE DRAWINGS

Fig. 1 is a diagram illustrating a configuration of a first exemplary embodiment of the present invention.
Fig. 2 is a diagram illustrating a configuration of a second exemplary embodiment of the present invention.
Fig. 3 is a diagram illustrating an example of the present invention. Fig. 4 is a diagram illustrating a configuration of a GW apparatus in the example of the present invention.
Fig. 5 is a sequence diagram illustrating operations in the example of the present invention.
Fig. 6 is a sequence diagram illustrating operations in the example of the present invention.
Fig. 7 is a sequence diagram illustrating operations in the example of the present invention.
Fig. 8 is a diagram illustrating a comparative example.
Fig. 9 is a diagram illustrating an example to which the second exemplary embodiment is applied.

### DESCRIPTION OF EMBODIMENTS

A gateway apparatus according to the present invention is connected between a base station and a backbone network. The gateway apparatus monitors a communication signal transmitted from a terminal apparatus through the base station, and the gateway apparatus outputs the communication signal to the backbone network, in a case where specifying information is not included in the communication signal, and forwards the communication signal to an external network, in a case where the specifying information is included in the communication signal. According to the present invention, just by installing the gateway apparatus on a network, and by directly forwarding a part of signals to the external network through the gateway apparatus, a load on a node constituting the backbone network can be reduced, without a major change to an existent system configuration.

According to one of preferred modes of the present invention, the gateway apparatus is arranged in a preceding stage of the backbone network. The gateway apparatus is connected to an external network (the gateway apparatus is configured to allow forwarding of a signal from the terminal apparatus to the external terminal through the gateway apparatus). The gateway apparatus includes a function to monitor (watch) the communication signal transmitted from the terminal apparatus through the base station. The gateway apparatus assigns the communication signal to the backbone network or to the external network, for output, according to the presence or absence of the specifying information (such as a character string) in the communication signal. The backbone network includes a serving node apparatus (SGSN) and a gateway node apparatus (GGSN). The gateway apparatus is arranged between the base station (radio base station) and the serving node apparatus (SGSN).

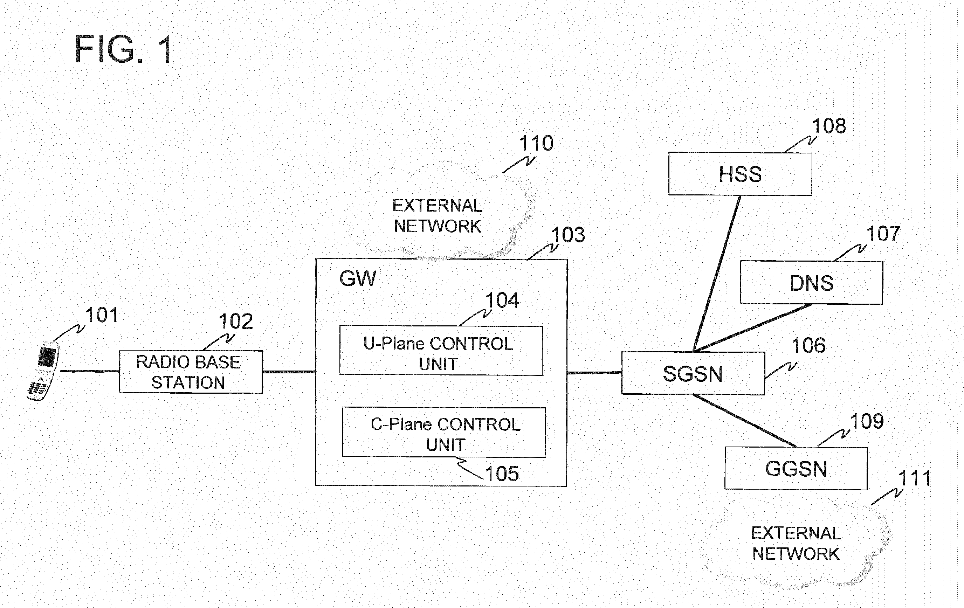

According to one of modes of the present invention, a system includes:
a node apparatus (106 in Fig. 1, for example) (serving node apparatus (SGSN) mainly in charge of serving subscriber information management, serving subscriber mobility management, incoming and outgoing call control, tunneling control, charging control, QoS control and the like) connected to a base station (BTS (Base Transceiver Station), Node B)/radio network controller (RNC: Radio Network Controller) (102 in Fig. 1, for example),
a node apparatus (109 in Fig. 1, for example) (gateway node (GGSN) that is gateway-connected to a different packet network and an Internet network and performs packet and session management and the like) connected to the serving node and connected to an external packet data network (external network) (111 in Fig. 1, for example), and
a server apparatus (107 in Fig. 1, for example). The server apparatus notifies to the serving node apparatus (106) an address (IP address) corresponding to a character string (name) (APN) that specifies an external network (IP packet data network) of an access target, for an inquiry from the serving node apparatus. In this system, the gateway apparatus (103 in Fig. 1, for example) is arranged between the radio network controller (102 in Fig. 1) and the serving node apparatus (106).

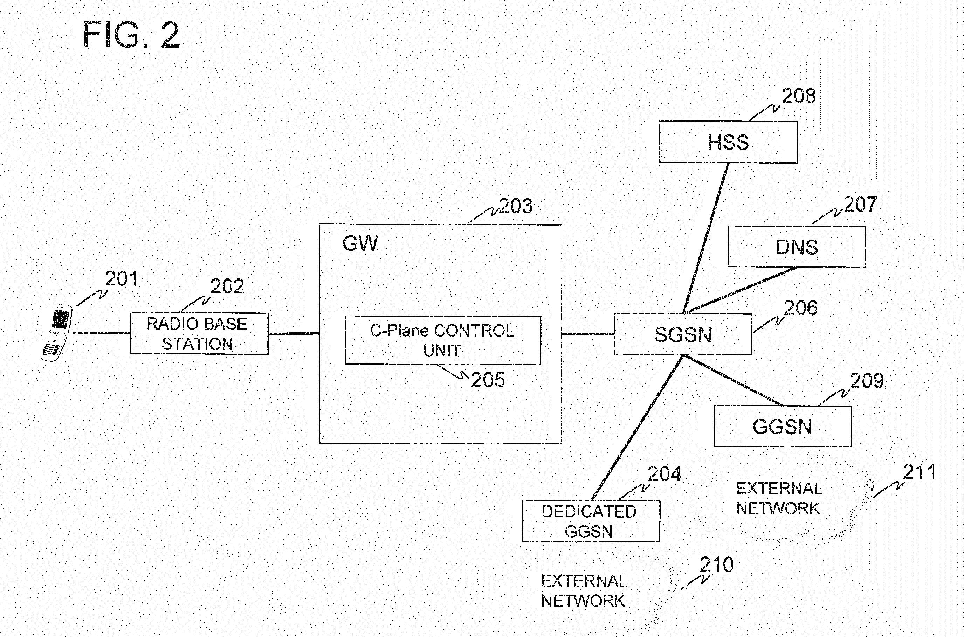

According to one of modes of the present invention, the gateway apparatus (103 in Fig. 1 or 203 in Fig. 2) monitors a control signal to be transmitted from the base station/radio network controller (102 in Fig. 1 or 202 in Fig. 2) to the serving node apparatus (106 in Fig. 1 or 206 in Fig. 2), and manipulates a predetermined preset information element and included in the control signal, and transmits the control signal to the serving node apparatus (106 or 206). Then, as the gateway node apparatus connected to the external packet data network, a gateway node apparatus corresponding to the manipulated information element is selected.

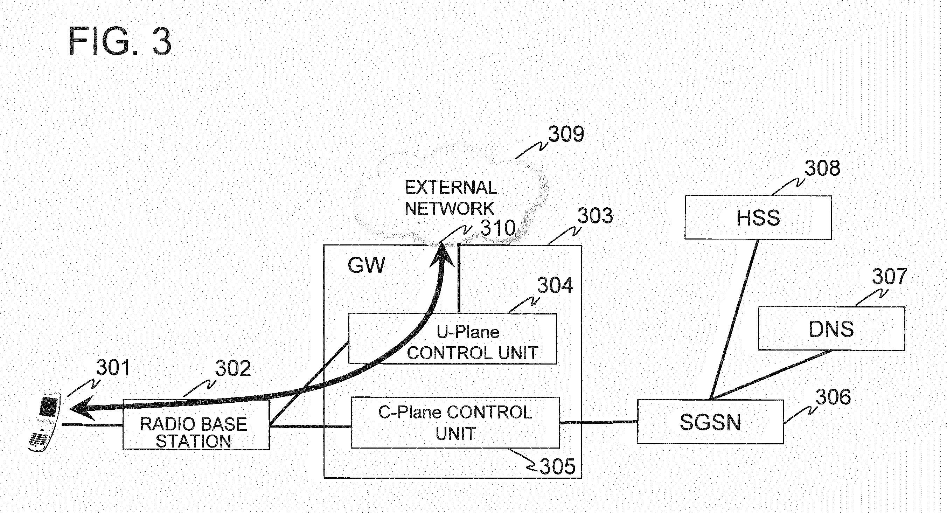

According to one of modes of the present invention, the gateway apparatus (303 in Fig. 3, for example) includes a gateway node unit (304 in Fig. 3, or GGSN unit, for example) that functions as the gateway node apparatus connected to an external packet data network within the gateway apparatus. As the gateway node apparatus corresponding to the manipulated information element, the gateway node unit provided in the gateway apparatus (303) is selected. Data to be transmitted from the radio network controller (302 in Fig. 3) to the external packet data network (external network) (309 in Fig. 3) is output to the external packet data network (309) through the gateway node unit (304 in Fig. 3) in the gateway apparatus. Data supplied to the gateway node unit of the gateway apparatus from the external network is transmitted to the radio network controller through the gateway node unit.

According to one of modes of the present invention, in a case wherein information (APN (access point name)) that is included in a control signal to specify an access target is a predefined name, the gateway apparatus may perform a manipulation of rewriting the information (APN) in the control signal which specifies the access target, wherein the control signal is transmitted from the mobile terminal apparatus to the serving node apparatus through the base station/radio network controller.

Alternatively, according to one of modes of the present invention, when terminal type information that is included in a control signal indicates a predefined model or a predefined equipment, the gateway apparatus may perform the manipulation of rewriting the information (APN) in the control signal, which is transmitted from the mobile terminal apparatus to the serving node apparatus through the base station/radio network controller.

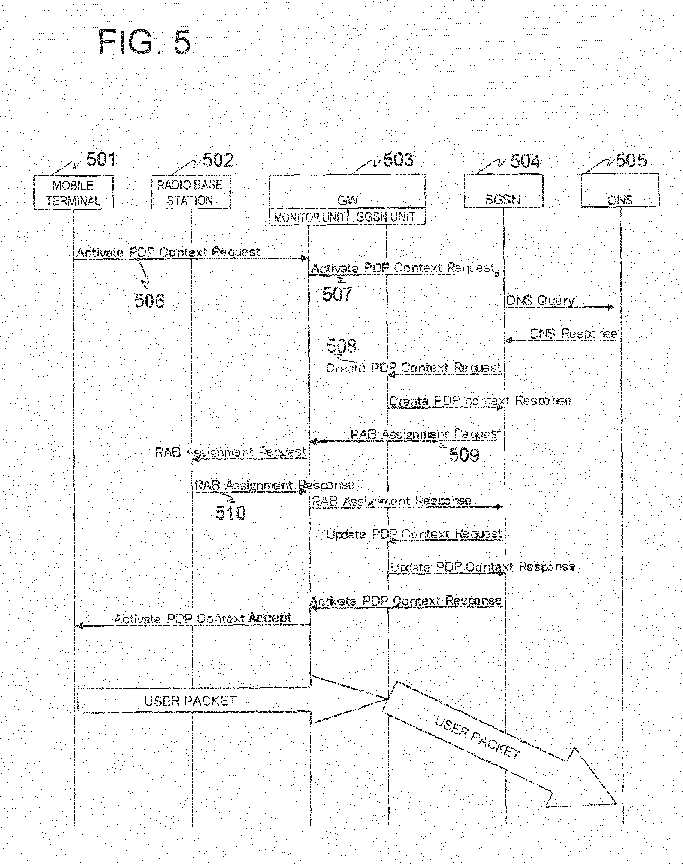

According to one of modes of the present invention, the serving node apparatus (504 in Fig. 5, for example) that has received the control signal from the gateway apparatus (503 in Fig. 5, for example) makes a query (DNS Query) to the server apparatus (505 in Fig. 5, for example) that derives an address corresponding to the APN included in the control signal (Activate PDP Context Request), and obtains the address corresponding to the APN as a response (DNS response) to the query. The serving node apparatus (504) selects the gateway node apparatus or the gateway node unit (GGSN unit) in the gate way apparatus (503) corresponding to the address, as the gateway node apparatus for connection to the external packet data network.

According to one of modes of the present invention, connection from the base station/radio network controller to the external packet data network through the gateway node unit provided in the gateway apparatus is made to implement a connection equivalent to a direct tunneling between the radio network controller and the gateway node unit.

According to one of modes of the present invention, it may be so configured that one gateway apparatus is provided for a plurality of radio network controllers (RNCs). Alternatively, a plurality of the gateway apparatuses are respectively provided for the plurality of radio network controllers (RNCs).

According to another mode of the present invention, the specifying information in the communication signal includes information (APN (access point name)) that specifies the access target of the terminal apparatus. Then, by rewriting the information that specifies the access target, a node apparatus regionally or network-topologically close to where the terminal apparatus is located is selected.

The system of the invention is so configured that a user traffic is connected to the gateway apparatus located in a shortest distance from the mobile terminal apparatus or the gateway apparatus closest to the mobile terminal apparatus in terms of a network topology, without making a major change to the existent packet communication apparatus (GPRS service node) in an existent packet communication network that accommodates 2G/3G, or the like.

According to the above-mentioned modes of the present invention, by providing the following functions (A) to (D) for the gateway (GW) apparatus, connection to the external network through the gateway in the shortest distance from the terminal is achieved, without modification of the existent SGNS apparatus or the existent RNC being necessitated, in a state where information necessary for charging is held, and without using the NAT technology.

(A) having a GGSN function (gateway function for an external packet data network and IP address assignment for a terminal).

(B) monitoring a communication signal between a mobile terminal apparatus and a serving node (SGSN), rewriting APN information in the signal, for example, and then causing the SGSN to select a GGSN unit in the GW apparatus, when the SGSN selects a GGSN.

(C) performing a processing on a signal including charging information between an SGSN and a GGSN unit in the GW, like that of a normal GGSN.

(D) directly forwarding to an external network a user-plane transfer signal to be forwarded from the radio base station to the SGSN apparatus;

In the above-mentioned function (B), the communication signal can be also guided to a different GGSN apparatus. Thus, it is possible to cause the SGSN apparatus to select a dedicated SGSN in view of the model or the equipment (type) of the mobile terminal apparatus.

With respect to the above-mentioned function (C), the SGSN is not made to perform packet processing. Thus, the direct tunnel (Direct Tunnel) technology can be applied without the modification of the existent SGSN being needed.

The following describes exemplary embodiments with reference to accompanied drawings. In the following description, it is assumed that a radio base station includes a base station (GSM base station BTS, or UMTS base station Node B) that performs radio communication with a mobile terminal apparatus 101 and a radio network controller (RNC) that controls the base station (BTS or Node B). In an explanation about an RNC connected to an SGSN through a Gb or Iu interface, the RNC is described as the "radio base station (RNC)". The present invention can be of course applied to a configuration including a base station that performs radio communication with a mobile terminal apparatus and an RNC that controls the base station and is connected to an SGSN.

### <First Exemplary Embodiment>

Fig. 1 is a diagram illustrating a configuration of a system in a first exemplary embodiment of the present invention. Referring to Fig. 1, the system includes a mobile terminal apparatus 101, a radio base station 102, a gateway apparatus (GW apparatus) 103, an SGSN apparatus 106, a DNS (Domain Name System) server 107, an HSS (Home Subscriber Server) 108 that manages subscriber data, a GGSN apparatus 109 connected to an external network 111, an external network 110 to which the GW apparatus 103 is connected, and the external network 111 to which the GGSN apparatus 109 is connected. The DNS server 107 converts an APN (Access Point Name) to an IP address of the GGSN. Though no particular limitation is imposed, the external network (external packet data network) 110 may be a public Internet network (that provides connectivity to the Internet), and the external network 111 may be an operator service network supported on the side of an operator, such as an IMS (IP Multimedia Subsystem). Alternatively, the external networks 110 and 111 may be an identical network. The HSS may be an HLR (Home Location Register).

The GW apparatus 103 includes a U-Plane control unit 104 and a C-Plane control unit 105. The U-Plane control unit 104 is a control unit that performs control corresponding to a user-plane function of a GGSN and implements a hierarchical protocol structure which provides user transfer information. The C-Plane control unit 105 supports and controls the user-plane function. Further, the C-Plane control unit 105 monitors a signal between the radio base station (RNC) 102 and the SGSN apparatus 106.

In a case wherein APN (access point name) information included in a control signal to specify an access target is a predefined name, the GW apparatus 103 rewrites the APN in the control signal and transmits a resulting control signal to the SGSN apparatus 106. The original control signal is to be transmitted from the mobile terminal apparatus 101 to the SGSN apparatus 106 through the radio base station (RNC) 102.

The SGSN apparatus 106 that has received the control signal from the GW apparatus 103 makes a query (DNS Query) to the DNS server 107 about the rewritten APN, obtains the IP address as a response (DNS Response) to the DNS query, and then selects, as a GGSN for connection to the external network, a function unit in the GW apparatus 103 corresponding to the GGSN corresponding to the IP address. With this arrangement, user data (IP traffic) to be transmitted from the mobile terminal apparatus 101 to the GGSN unit corresponding to the GGSN through the radio base station (RNC) 102, the GW apparatus 103, and the SGSN apparatus 106 is directly output from the radio base station (RNC) 102 to the external network 110 via the GGSN unit of the GW apparatus 103. User data supplied to the GGSN unit of the GW apparatus 103 from the external network 110 is transmitted to the mobile terminal apparatus 101 through the radio base station (RNC) 102.

In a usual packet communication network, the GW apparatus 103 is not present, and the radio base station (RNC) 102 and the SGSG apparatus 106 are directly connected. When the mobile terminal apparatus 101 performs packet communication, a bearer that connects to the external network 111 through the radio base station (RNC) 102, the SGSN apparatus 106, and further the GGSN apparatus 109 is created. Then, communication is performed by transmitting and receiving user data on the bearer. The SGSN apparatus 106 makes a query to the DNS server 107. Then, the DNS server 107 returns the GGSN IP address corresponding to the APN to the SGSN apparatus 106 as a response. The SGSN apparatus 106 establishes a GTP tunnel between the SGSN apparatus 106 and a GGSN. The GGSN apparatus 109 is connected to the external network 11.

In this exemplary embodiment, when the mobile terminal apparatus 101 performs packet communication, a bearer that connects to the external network 110 through the radio base station 102, and the GW apparatus 103 is created, and communication is performed by transmitting and receiving user data on the bearer. For this reason, packet communication with the external network 110 using the bearer with a shortest distance from the mobile terminal apparatus 101 or shortest in terms of a network topology can be performed.

In this exemplary embodiment, even in a packet communication network where the direct tunnel (Direct Tunnel) technology is not applied, an effect corresponding to the direct tunnel technology is achieved. More specifically, in usual GTP (GPRS Tunneling Protocol) tunnel management, two tunnels which are an RNC-SGSN tunnel (such as Iu) and an SGSN-GGSN tunnel (such as Gn) are established.

According to this exemplary embodiment, the GW apparatus 103 and the external network 110 are connected, and direct connection is made from the radio base station (RNC) to the external network 110 through the GW apparatus 103. Thus, a direct tunnel is equivalently provided from the RNC to the GGSN (GGSN unit within the GW apparatus 103).

In the direct tunnel technology of the related art, the user plane apparatus of an SGSN becomes unnecessary. However, every time an RNC is changed due to movement of a mobile terminal, an RNC-GGSN tunnel needs to be updated.

According to this exemplary embodiment, even if an RNC change occurs from an original RNC to a different RNC due to movement of a mobile terminal, an RNC-GGSN tunnel does not need to be updated. Assume that the GW apparatus 103 is provided for each RNC, for example. Then, even if the original RNC is changed to the different RNC, the GW apparatus 103 corresponding to the different RNC offloads an IP traffic to the external network 110. On the other hand, assume that one GW apparatus 103 is provided for a plurality of the RNCs. Then, when an RNC change occurs from the original RNC to an adjacent RNC, for example, the GW apparatus 103 is directly connected to the external network 110 through a tunnel between the adjacent RNC and the GW apparatus 103.

### <Second Exemplary Embodiment>

Fig. 2 is a diagram illustrating a configuration of a system in a second exemplary embodiment of the present invention. The system includes a mobile terminal apparatus 201, a radio base station 202, a GW apparatus 203, an SGSN apparatus 206, a DNS server 207 that converts an APN (Access Point Name) to an IP address for the gateway (GW) apparatus 203, an HSS 208 that manages subscriber data, a GGSN apparatus 209, a dedicated GGSN apparatus 204, and an external network 210 to which the dedicated GGSN. apparatus 204 is connected, and an external network 211 to which the GGSN apparatus 209 is connected. The GW apparatus 203 includes a C-Plane control unit 205 (but does not include the User-Plane control unit in Fig. 1). Though no particular limitation is imposed, the external network (external packet data network) 210 may be a public internet network (that provides connectivity to the Internet), and the external network 211 may be an operator service network supported on the side of an operator, such as an IMS (IP Multimedia Subsystem). Alternatively, the external networks 210 and 211 may be an identical network. The C-Plane control unit 205 of the GW apparatus 203 monitors a signal between the radio base station (RNC) 202 and the SGSN apparatus 206.

When APN (access point name) information that specifies an access target and is included in a control signal is a predefined name, the C-plane control unit 205 of the GW apparatus 203 rewrites the APN in the control signal and transmits a resulting control signal to the SGSN apparatus 206. The original control signal is to be transmitted from the portable termination apparatus 201 to the SGSN apparatus 206 through the radio base station (RNC) 202.

The SGNS apparatus 206 that has received the control signal from the GW apparatus 203 makes a query (DNS query) to the DNS server 207 about the rewritten APN, obtains an IP address as a response (DNS response) to the DNS query, and selects the dedicated GGSN apparatus 204 corresponding to the IP address. With this arrangement, user data from the mobile terminal apparatus 201 is output to the external network 210 through the radio base station (RNC) 202, the SGSN apparatus 206, and the dedicated GGSN apparatus 204. User data supplied to the dedicated GGSN apparatus 204 from the external network 210 is transmitted to the mobile terminal apparatus 201 through the SGSN apparatus 206 and the radio base station (RNC) 202.

On the other hand, in a usual packet communication network, the GW apparatus 203 is not present, and the radio base station (RNC) 202 and the SGSG apparatus 206 are directly connected. When the mobile terminal apparatus 201 performs packet communication, a bearer that connects from the mobile terminal apparatus 201 to the external network 211 through the radio base station 202, the SGSN apparatus 206, and the GGSN. apparatus 209 is created, and communication is performed by transmitting and receiving user data on the bearer.

### <Variation Example of Second Exemplary Embodiment>

As a variation example of the second exemplary embodiment, the C-Plane control unit 205 of the GW apparatus 203 may select the dedicated GGSN apparatus 204 according to equipment information of the mobile terminal apparatus 201 (such as a model name or a model number (soft version information or the like) recognized by an IMEI-SV (International Mobile Equipment Identity-Software Version)). The C-plane control unit 205 of the GW apparatus 203 obtains the equipment information (terminal type information) of the mobile terminal apparatus from a control signal to be transmitted from the radio base station (RNC) 202 to the SGSN apparatus 206. In a case where the terminal type information is a predefined one, the C-plane control unit 205 rewrites an APN in the control signal, and transmits the rewritten APN to the SGSN apparatus 206. The SGSN apparatus 206 refers to the DNS server 207 about the rewritten APN, obtains the IP address, and sets a tunnel between the GGSN apparatus corresponding to the rewritten APN and the SGSN apparatus 206. When the GW apparatus 203 determines that the mobile terminal apparatus is a mobile terminal apparatus mainly used for Internet access (mobile terminal apparatus such as a smart phone (iPhone (trade mark) by the Apple Corporation, or Galaxy S (trade mark) by the Samsung Electronics Co., Ltd.), the GW apparatus 203 establishes connection to the external network 210 through the SGSN apparatus 206 and the dedicated GGSN apparatus 204.

A bearer that connects from the mobile terminal apparatus 201 to the external network 210 through the radio base station 202, the SGSN apparatus 206, and the dedicated GGSN apparatus 204 is created. Communication is performed by transmitting and receiving user data on the bearer. It therefore becomes possible for a mobile operator to narrow down a function necessary for the GGSN apparatus according to the type of the mobile terminal apparatus such as the model or the equipment. By omitting mounting of an expensive equipment such as a content filter equipment, an ancillary equipment relevant to lawful interception (Lawful Interception), or the like on the dedicated GGSN apparatus 204 selected for the mobile terminal apparatus that provides only connection to the Internet, for example, cost reduction becomes possible. That is, selection/specialization is made possible for the dedicated GGSN apparatus 204, so that a function/service (such as security, a content filtering function, a site access restriction function, a high-speed operation using a content cache or the like, a preferential service, or the like) of the dedicated GGSN apparatus 204 is different from that of the GGSN apparatus 209. The following describes examples of the present invention.

### <Example>

Fig. 3 is a diagram illustrating an example of the first exemplary embodiment shown in Fig. 1. As shown in Fig. 3, a GW apparatus 303 that connects a mobile terminal apparatus 301 to an external network 309 includes a U-Plane control unit 304 and a C-Plane control unit 305. Reference sign 310 indicates a communication path to the external network 309 from the mobile terminal apparatus 301. A radio base station 302, the GW apparatus 303, an SGSN apparatus 306, a DNS server 307, and an HSS 308 are respectively the same as the radio base station 102, the GW apparatus 103, the SGSN apparatus 106, the DNS server 107, and the HSS 108. As shown in Fig. 3, connection to the external network 309 from the mobile terminal apparatus 301 is made through the radio base station 302 and the U-Plane control unit 304 of the GW apparatus 303,and an offloading an IP traffic is carried out. As in the first exemplary embodiment, the GW apparatus 303 rewrites an APN in a control signal to be transmitted from the radio base station 302 to the SGSN apparatus 306 and transmits the resulting control signal to the SGSN apparatus 306. The DNS server 307 thereby returns an IP address corresponding to the rewritten APN to the SGSN apparatus 306 as a response. The SGSN apparatus 306 selects the GGSN unit (U-Plane control unit) of the GW apparatus 303. The U-plane control unit 304 of the GW apparatus 303 is thereby selected.

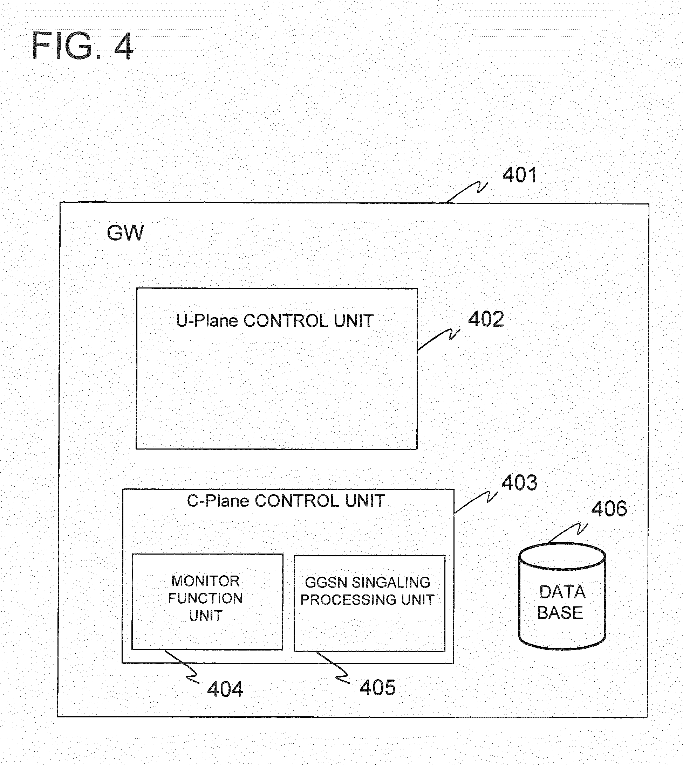

Fig. 4 is a diagram illustrating an example of a configuration of the GW apparatus 303 in Fig. 3 (a GW apparatus 401 corresponds to each of the GW apparatus 103 in Fig. 1 and the GW apparatus 303 in Fig. 3). Referring to Fig. 4, the GW apparatus 401 includes a U-Plane control unit 402, a C-plane control unit 403, and a database 406. The C-plane control unit 403 includes a monitor function unit 404 and a GGSN signaling processing unit 405.

The database 406 holds an APN which is a target for rewriting as text information. The monitor function unit 404 performs control of monitoring a signal to be transmitted from the RNC to the SGSN apparatus, extracting an APN from a PDP context activation request, searching the database 406 to check whether the extracted APN is a rewriting target APN, rewriting the extracted APN when the extracted APN is the rewriting target APN, and then transmitting the signal including the rewritten APN to the SGSN apparatus 306.

The GGSN signaling processing unit 405 performs signaling processing between a GGSN apparatus and the SGSN apparatus and signaling processing between GGSN apparatus and the HSS. When the GGSN signaling processing unit 405 and the U-plane control unit 402 that implements a GGSN user-plane function are combined, a function corresponding to that of the SGSN apparatus is achieved.

The GW apparatus 203 in the second exemplary embodiment shown in Fig. 2 includes the C-Plane control unit 205 and the database 406 in Fig. 4. The C-plane control unit 205 includes the monitor function unit 404 in Fig. 4.

Fig. 5 illustrates operations of changing an APN by the GW apparatus 103 (GW apparatus 401 in Fig. 4) in the first exemplary embodiment.

A mobile terminal (user equipment: UE) 501 transmits to a radio base station 502 a request (communication start signal) (activate PDP context request: Activate PDP Context Request) 506 for activating a PDP context between an SGSN and a GGSN. Such items of information as APN (Access Point Name) and QoS (Quality of Service) are included in this activate PDP context request. The APN is a text string indicating an external network (packet data network) to which the mobile terminal 501 is to be connected.

The radio base station (RNC) 502 forwards the signal 506 from the mobile terminal 501 to an SGSN apparatus 504. The monitor unit (404 in Fig. 4) of the GW apparatus 503 monitors all signals transmitted from the radio base station (RNC) 502 toward the SGSN apparatus 504.

The monitor unit (monitor function unit 404 in Fig. 4) of the GW apparatus 503 detects the signal 506 from among the monitored signals, and rewrites an APN included in the signal 506 when the APN is a rewriting target APN. The rewriting target APN is held in the database 406 of the GW apparatus 503. That is, the monitor unit of the GW apparatus 503 searches whether or not the APN set in the signal 506 matches the APN held in the database 406. If the monitor unit of the GW apparatus 503 finds that the APN set in the signal 506 matches the APN held in the database 406, the monitor unit of the GW apparatus 503 rewrites the APN in the signal with corresponding information. Then, the GW apparatus 503 transmits to the SGSN apparatus 504 a signal 507 having the APN rewritten. In a case where the APN specified in the activate PDP context request is "Internet" and "Internet" is held in the database 406 as the APN, for example, the monitor unit (404 in Fig. 4) rewrites the APN to "Kawasaki.Internet" corresponding to the external network to which the GGSN unit of the GW apparatus 503 is connected. The database (406 in Fig. 4) of the GW apparatus 503 may associate and hold a rewriting target APN and the APN that has been rewritten.

In rewriting the APN, an access target is not limited to a GGSN unit in the GW apparatus 503. The monitor unit (monitor function unit 404 in Fig. 4) of the GW apparatus 503 may rewrite the APN to an APN (such as "Yokohama. Internet") of the external network to which the GGSN unit of a GW apparatus different from the GW apparatus 503 is connected.

The SGSN apparatus 504 makes a query (DNS Query) to a DNS server 505 using the APN included in the signal 507 as a key to search a GGSN IP address. In this case, the DNS server 505 searches the GGSN IP address using the rewritten APN because the APN has been rewritten by (the monitor function unit 404 of) the GW apparatus 503. As a result, the IP address of the GGSN unit of the GW apparatus 503 is derived, and is then notified to the SGSN apparatus as a response (DNS Response). The DNS server 505 makes a query using the APN = "Kawasaki. Internet", so that the IP address corresponding to the name "Kawasaki. Internet", or the IP address of the GGSN unit in the GW apparatus 503 is returned to the SGSN apparatus 504. It is assumed that the IP address corresponding to the APN = "Kawasaki. Internet" is registered in the DNS server 505 in advance.

The SGSN apparatus 504 performs signal exchange with the GGSN unit of the GW apparatus 503, in a similar way in which the SGSN apparatus 504 usually performs signal exchange with a GGSN apparatus. That is, the SGSN apparatus 504 transmits a signal (create PDP context request: Create PDP Context Request) 508 to the GGSN unit of the GW apparatus 503 in order to set a tunnel between the SGSN apparatus and the GGSN unit. This signal 508 includes identifiers TEIDs (Tunnel Endpoint Identifiers) for the end point of the GTP tunnel and information (Charging Characteristics) necessary for a charging process.

When receiving the signal 508, the GW apparatus 503 performs a process as in the case of a usual GGSN apparatus (tunnel setting and IP address assignment), and then makes a response (Create PDP Context Response) to the SGSN apparatus 504. This response (Create PDP Context Response) includes an IP address for the terminal 501. That is, the GGSN unit of the GW apparatus 503 notifies the IP address to be routed to the GGSN unit from the external network as the user IP address of the mobile terminal 501.

On receipt of the response from the GGSN unit (GGSN unit of the GW apparatus 503), the SGSN apparatus 504 transmits a radio bearer assignment request signal (RAB Assignment Request) 509 to the radio base station (RNC) 502. The signal (RAB Assignment Request) 509 specifies a radio access bearer identifier (RAB ID), QoS characteristics, and a GTP tunnel on the side of the SGSN apparatus.

The radio base station (RNC) 502 performs setup (RAB setup) of a radio communication path between the radio base station (RNC) 502 and the terminal. Then, the radio base station (RNC) 502 transmits a response signal (RAB Assignment Response) 510 of the radio bearer assignment response request signal 509 to the SGSN apparatus 504.

The GW apparatus 503 detects the signal 509, using the monitor function unit (404 in Fig. 4), and holds tunnel information (RAB ID), TEIDs (Tunnel Endpoint Identifiers), IP addresses) between the radio base station 502 and the SGSN apparatus 504.

On receipt of the radio bearer assignment response (RAB Assignment Response) from the radio base station (RNC) 502 through the GS apparatus 503, the SGSN apparatus 504 transmits an update PDP context request (Update PDP Context Request) to the GGSN unit of the GW apparatus 503. The update PDP context request is transmitted from the SGSN apparatus to the GGSN unit in order to make a path change or a QoS change. The PDP context includes information on a logical path between the mobile terminal (UE) 501 and the network.

The GGSN unit of the GW apparatus 503 transmits to the SGSN apparatus 504 a response (Update PDP Context Response) for the update PDP contest request.

The SGSN apparatus 504 that has received the response transmits to the radio base station (RNC) 502 a response (Activate PDP Context Response (Accept)) for the activate PDP context request.

The U-Plane control unit 402 of the GW apparatus (refer to Fig. 4) detects a GTP packet (user packet) to be transmitted from the radio base station (RNC) 502 to the SGSN apparatus 504 using the held tunnel information as key information, and then directly transmits the detected GTP packet to an external network. That is, an IP traffic offloading process is performed. The GW apparatus 503 converts a user packet received from the external network to a GTP tunnel packet, and transmits the GTP tunnel packet to the radio base station (RNC) 502.

As described above, the monitor unit of the GW apparatus 503 changes the APN to achieve transmission of the user packet to the external network from the GW apparatus 503.

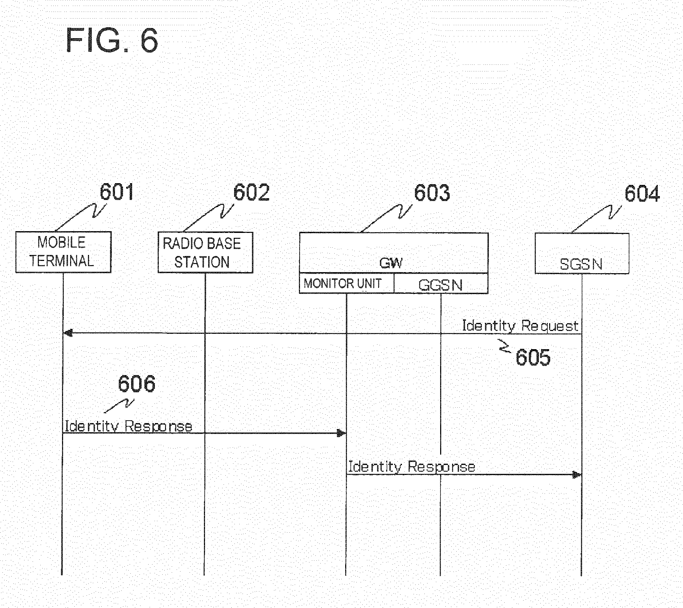

Fig. 6 illustrates operations of detecting the model or the equipment of a mobile terminal by a GW apparatus. An SGSN apparatus 604 transmits a signal (Identify Request) 605 to a mobile terminal 601 to check the ID (identification number) of the mobile terminal 601.

The mobile terminal 601 responds to the signal (Identity Request) 605 by the ID (IMEI - SV) of equipment information of the mobile terminal using a signal (Identify Response) 606. When the mobile terminal 601 makes the response, a GW apparatus 603 monitors the signal 606, associates the equipment information of the mobile terminal 601 with the ID (P-TMSI (Packet-Temporary-Mobile-Subscriber-Identity) or the like) being used as session information between the mobile terminal 601 and the SGSN apparatus 604, and then stores the equipment information of the mobile terminal 601. This ID being used between the mobile terminal 601 and the SGSN apparatus 604 is also given to a communication start signal (Activate PDP Context Request) 506. Thus, association of the ID becomes possible. As explained in the second exemplary embodiment, the GW apparatus obtains the equipment information of the mobile terminal using the communication start signal (Activate PDP Context Request) 506. In a case where the obtained equipment information is predefined equipment information, the GW apparatus rewrites an APN in the communication start signal (Activate PDP Context Request) 506, and then transmits a signal 507 resulting from the rewriting to the SGSN apparatus.

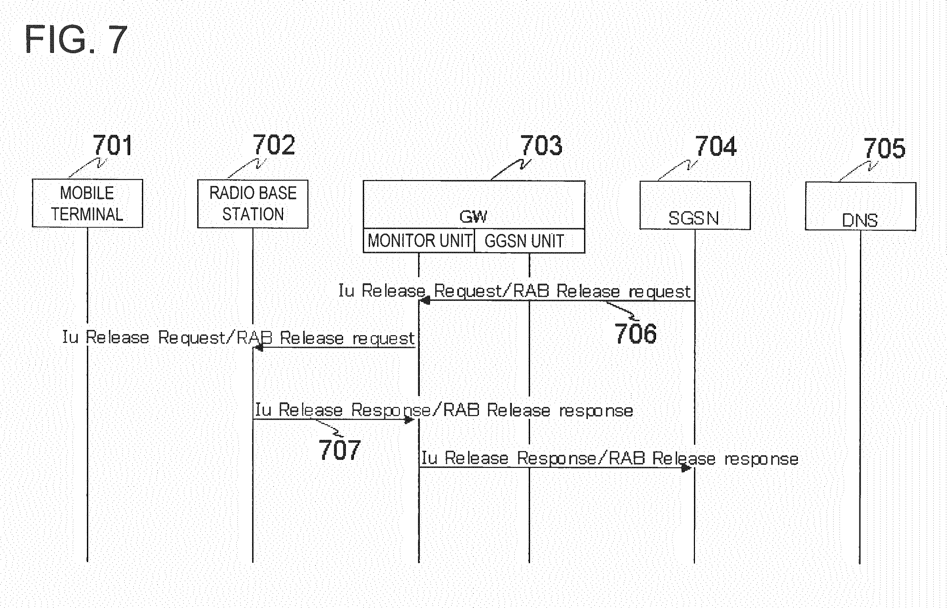

Fig. 7 illustrates operations of deleting tunnel information between a radio base station (RNC) 702 and an SGSN apparatus 704 by a GW apparatus.

In deleting a radio communication path, a signal (Iu Release Request or RAB Release Request) 706 is transmitted to the SGSN apparatus 704 and the radio base station (RNC) 702, and a signal (Iu Release Response or RAB release response) 707 is exchanged.

A GW apparatus 703 monitors the signal 706 and the signal 707, detects tunnel information (RAB ID) to be deleted, and then deletes the tunnel information held in the U-Plane processing unit (104 in Fig. 1). Consequently, the U-Plane processing unit (104 in Fig. 1) of the GW apparatus 703 does not directly transmit a GTP packet (user packet) to be transmitted from the radio base station (RNC) to the SGSN apparatus to an external network.

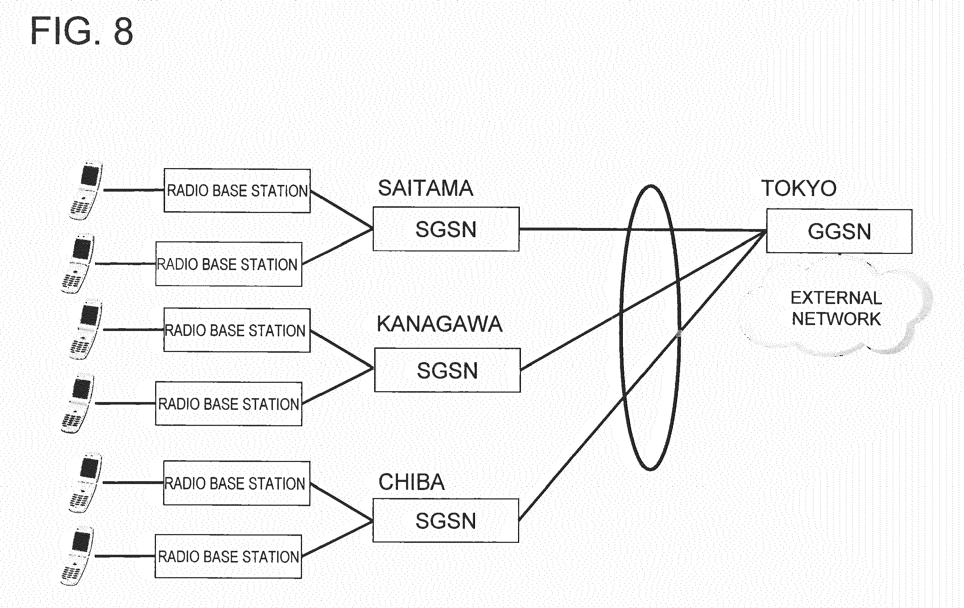

Fig. 8 is a diagram illustrating a comparative example. In the example shown in Fig. 8, the GW apparatus according to the present invention is not provided. Thus, when APNs from a plurality of SGSN apparatuses (SGSN apparatuses installed respectively in Saitama, Kanagawa, and Chiba, for example) that specify external networks (IP packet data networks (PNDs)) of access targets are the same APN (APN = "internet"), all traffics are concentrated on a same GGSN apparatus (such as the one installed in Tokyo) connected to the external network. Transmission cost will therefore increase.

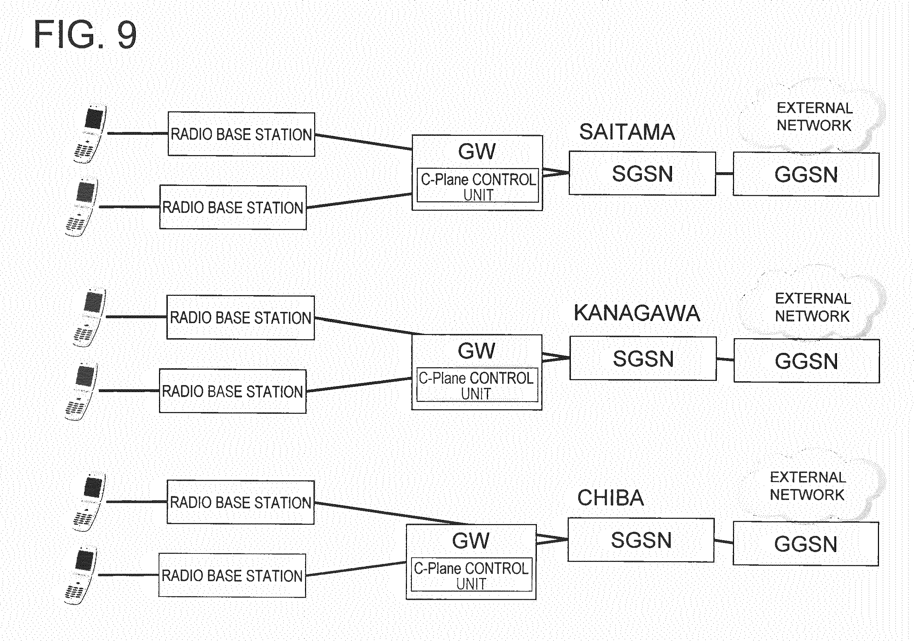

Fig. 9 is a diagram illustrating the second exemplary embodiment of the present invention. As shown in Fig. 9, according to the second exemplary embodiment, the C-Plane control unit of a GW apparatus in Saitama, for example, rewrites the APN = "internet" in control information (activate PDP context request: Activate PDP Context Request) to APN = "Saitama. Internet", transmits the control information with the APN rewritten to an SGSN apparatus. Then, the SGSN apparatus obtains an IP address corresponding to "Saitama. Internet" from a DNS server, and then the SGSN apparatus establishes connection to an external network through a corresponding GGSN apparatus. The C-Plane control unit of a GW apparatus in Kanagawa rewrites the APN = "internet" to APN = "Kanagawa. Internet", for transmission to an SGSN apparatus. Then, the SGSN apparatus obtains an IP address corresponding to "Kanagawa. Internet" from the DNS server, and then the SGSN apparatus establishes connection to an external network through a corresponding GGSN apparatus similarly, the C-Plane control unit of a GW apparatus in Chiba rewrites the APN = "internet" to APN = "Chiba. Internet", for transmission to an SGSN apparatus. Then, the SGSN apparatus obtains an IP address corresponding to "Chiba. Internet" from the DNS server, and then the SGSN apparatus establishes connection to an external network through a corresponding GGSN. apparatus. As described above, connection to the external network can be made for each area (e.g., for each prefecture). Concentration of traffics can be thereby avoided, thus enabling contribution to reduction of transmission cost.

According to the present exemplary embodiments, operations and effects described below are achieved.

(1) According to the present exemplary embodiments, a GW apparatus is installed at an appropriate location between a radio base station and an SGSN. A user traffic can be thereby connected to an external network without making a major change to an existent packet communication apparatus. Accordingly, a mobile operator can reduce transmission cost, equipment cost and the like for a user traffic.

(2) According to the present exemplary embodiment, a GW apparatus includes a gateway function. Thus, when the mobile terminal hands over to a different radio base station or to a different SGSN apparatus due to the movement of the mobile terminal, communication can be continued. The second effect cannot be achieved by a TOF apparatus described in Annex B in Non Patent Literature 1.

(3) According to the present exemplary embodiments, a GW apparatus directly communicates with a radio base station. The effect equivalent to the direct tunnel technology can be achieved even in a packet communication network in which the direct tunnel technology is not applied.

(4) According to this exemplary embodiment, the GW apparatus selects the dedicated GGSN apparatus according to the type (such as the model name or the model number to be recognized by the IMEI - SV) of the mobile terminal apparatus. A function necessary for the GGSN apparatus can be thereby narrowed down according to the type of the mobile terminal apparatus specifically, by omitting mounting of an expensive equipment such as a content filter equipment, an ancillary equipment relevant to lawful interception (Lawful Interception) on the mobile terminal apparatus that provides only connection to the Internet, cost reduction becomes possible.

(5) Further, according to this exemplary embodiment, as a node apparatus (GGSN) connected to the external network, a GGSN apparatus located regionally or network-topologically close to the mobile terminal apparatus is selected. Optimization of a communication path can be thereby achieved.

Each disclosure of the above-listed Non Patent Literature is incorporated herein by reference. Modification and adjustment of each exemplary embodiment and each example are possible within the scope of the overall disclosure (including the claims) of the present invention and the technical concept of the present invention. Various combinations and selections of various disclosed elements (including each element in each claim, each element in each example, and each element in each drawing) are possible within the scope of the claims of the present invention. That is, the present invention includes various variations and modifications that could be made by those skilled in the art according to the overall disclosure including the claims and the technical concept.

### REFERENCE SIGNS LIST

- 101, 201, 301, 501, 601, 701: mobile terminal apparatus
- 102, 202, 302, 502, 602, 702: radio base station (RNC)
- 103, 203, 303, 401, 503, 603, 703: GW apparatus
- 104, 304, 402: U-Plane control unit
- 105, 205, 305, 403: C-Plane control unit
- 106, 206, 306, 504, 604, 704: SGSN apparatus
- 107, 207, 307, 505, 705: DNS server
- 108, 208, 308: HSS
- 109, 209: GGSN apparatus
- 110, 111, 210, 211, 309: external network
- 204: dedicated GGSN
- 404: monitor function unit
- 405: GGSN signaling processing unit
- 406: database
- 506: communication start signal

## Claims

1. A gateway apparatus connected between a base station and a backbone network, wherein the gateway apparatus monitors a communication signal transmitted from a terminal apparatus through the base station, and
in a case where specifying information is not included in the communication signal, the gateway apparatus outputs the communication signal to the backbone network, and, in a case where the specifying information is included in the communication signal, the gateway apparatus forwards the communication signal to an external network.

2. The gateway apparatus according to claim 1, wherein the gateway apparatus monitors a communication signal transmitted from the terminal apparatus through the base station, and performs manipulation on predetermined preset information element in the communication signal, for output to the backbone network.

3. The gateway apparatus according to claim 1 or 2, wherein the gateway apparatus is arranged between the base station and an SGSN (serving GPRS (General Packet Radio Service) support node) of the backbone network.

4. The gateway apparatus according to claim 3, comprising:
a GGSN unit that functions as a GGSN (gateway GPRS (General Packet Radio Service) support node) of the backbone network; and
a monitor unit that rewrites an APN (access point name) which is included in the communication signal and which specifies the external network of an access target, in a case where the APN is a predefined name and that outputs the communication signal to the SGSN.

5. The gateway apparatus according to claim 4, wherein the GGSN unit is selected as a GGSN for connection to the external network by transmitting the communication signal including the rewritten APN to the SGSN, and
a signal to be forwarded from the terminal apparatus to the external network through the base station is forwarded to the external network through the GGSN unit, without through the backbone network.

6. The gateway apparatus according to claim 1, wherein the specifying information includes model information or equipment information of the terminal apparatus.

7. The gateway apparatus according to claim 1, wherein the specifying information includes information that specifies an access target of the terminal apparatus.

8. The gateway apparatus according to claim 1, wherein the gateway apparatus is connected to the external network.

9. The gateway apparatus according to claim 1, comprising:
monitor means for monitoring the communication signal; and
forwarding means connected to the external network and capable of forwarding the communication signal to the external network.

10. The gateway apparatus according to claim 9, comprising:
a control-plane (C-Plane) control unit including the monitor means; and
a user-plane (U-Plane) control unit including the forwarding means.

11. A communication system comprising:
the terminal apparatus and the base station as set forth in claim 1 ; and
the gateway apparatus as set forth in any one of claims 1 to 9.

12. A communication method comprising:
monitoring a communication signal transmitted from a terminal apparatus through a base station; and
in a case where specifying information is not included in the communication signal, outputting the communication signal to an external network through a backbone network, and in a case where the specifying information is included in the communication signal, forwarding the communication signal to the external network not through the backbone network.

13. The communication method according to claim 12, comprising:
monitoring a communication signal transmitted from the terminal apparatus through the base station, by a gateway apparatus arranged between the base station and the backbone network; and
in a case where the specifying information is not included in the communication signal, outputting the communication signal to the backbone network through the gateway apparatus, and in a case where the specifying information is included in the communication signal, forwarding the communication signal to the external network, through the gateway apparatus, without through the backbone network.

14. The communication method according to claim 13, comprising:
monitoring the communication signal transmitted from the terminal apparatus through the base station, by the gateway apparatus and
performing a manipulation on a predetermined preset information element in the communication signal, for output to the backbone network.

15. The communication method according to claim 12 or 13, wherein the gateway apparatus is arranged between the base station and an SGSN (serving GPRS (General Packet Radio Service) support node) of the backbone network.

16. The communication method according to claim 15, comprising:
rewriting an APN (access point name) included in the communication signal to specify the external network of an access target, by the gateway apparatus, in a case wherein the APN is a predefined name; and
outputting the communication signal to the SGSN.

17. The communication method according to claim 16, comprising:
selecting a GGSN unit that is provided at the gateway apparatus and functions as a GGSN (gateway GPRS (General Packet Radio Service) support node) of the backbone network, as a GGSN for connection to the external network, by the SGSN that receives the communication signal including the APN rewritten by the gateway apparatus; and
forwarding to the external network a signal to be forwarded from the terminal apparatus to the external network through the base station, through the GGSN unit of the gateway apparatus, without through the backbone network.

18. The communication method according to claim 12, wherein the specifying information includes model information or equipment information of the terminal apparatus.

19. The communication method according to claim 12, wherein the specifying information includes information that specifies an access target of the terminal apparatus.
